# EUROPEAN PATENT APPLICATION

(11) **EP 4 506 558 A1**
(43) Date of publication of application: **12.02.2025**
(21) Application number: 23190843.5
(22) Date of filing: 10.08.2023
(51) Int. Cl.: F03D 1/06

(54) **METHOD FOR JOINING TWO ROTOR BLADE SEGMENTS OF A WIND TURBINE ROTOR BLADE AS WELL AS ALIGNMENT PIN**

(71) Applicant: Nordex Energy SE & Co. KG, 22419 Hamburg (DE)
(72) Inventor: WACKROW, Torsten, 22419 Hamburg (DE); FESTNER, Gerald, 22419 Hamburg (DE)
(74) Representative: Epping - Hermann - Fischer

(57) **Abstract**

The invention concerns a method of connecting two rotor blade segments (132, 134) of a wind turbine rotor blade (110), comprising:
- providing a first rotor blade segment (132) and a second rotor blade segment (134),
- providing a longitudinally extending alignment pin (152, 176, 180),
- inserting the alignment pin (152, 176, 180) into the first rotor blade segment (132) such that a first longitudinal section (156) is received in the first bushing (140) and a second longitudinal section (158) protrudes out of the first bushing (140),
- aligning the second rotor blade segment (134) by means of the inserted alignment pin (152, 176, 180), wherein the second rotor blade segment (134) is moved onto the alignment pin (152, 176, 180),
- removing the alignment pin (152, 176, 180) from the first rotor blade segment (132),
- tightly screwing a connecting bolt (146) in the first bushing (140) and second bushing (142) to mechanically connect the two rotor blade segments (132, 134) to one another.

The invention also refers to the use of an alignment pin.

## Description

The invention concerns a method for joining two rotor blade segments of a wind turbine rotor blade. The invention also concerns an alignment pin.

Wind turbines with wind turbine rotor blades are widely known from the state of the art and are used to convert wind energy into electrical energy. A rotor blade can be designed as a split or segmented rotor blade, in which rotor blade segments are arranged and joined together lengthwise to form an entire rotor blade. Mechanical connections are generally used to join the two rotor blade segments. Typically, a plurality of connection elements (so-called inserts, for example cross bolts or bushings) is integrated into the laminate of each rotor blade segment, by means of which the rotor blade segments can be connected to each other, either directly or via one or more suitable intermediate connection pieces. Typically, fastening means or connecting means such as fastening bolts, e.g. screw bolts, or the like are used for a direct connection or for connecting to the one or more intermediate connection pieces. A generic structure is known, for example, from international application WO 2015/124568 A1.

Segmented rotor blades are becoming increasingly important and provide advantages, in particular for transport reasons, since the overall length of the rotor blades tends to increase in order to achieve a higher energy output.

A known challenge with regard to segmented rotor blades is that the rotor blade segments need to be aligned exactly prior to connecting them, e.g. in the field.

One object underlying the present invention is to provide a concept for segmented rotor blades which ensures a reliable assembly process.

This object is achieved by the independent claims and the respective sub-claims.

According to an aspect, a method of connecting two rotor blade segments of a wind turbine rotor blade is disclosed. The method comprises the steps of:
- providing a first rotor blade segment having at least a first bushing at a first connection end,
- providing a second rotor blade segment having at least a second bushing at a second connection end, the second connection end being assigned to the first connection end,
- providing a longitudinally extending alignment pin, which at least has a first longitudinal section and a second longitudinal section,
- inserting the alignment pin into the first bushing such that the first longitudinal section is received in the first bushing and the second longitudinal section protrudes out of the first bushing,
- aligning the second rotor blade segment by means of the inserted alignment pin, wherein the second rotor blade segment is moved onto the alignment pin, such that
   -- the second longitudinal section of the alignment pin is received in the second bushing, and
   -- a first central longitudinal axis of the first bushing is coaxial with a second central longitudinal axis of the second bushing and both central longitudinal axes form a common longitudinal axis,
- moving the second rotor blade segment away from the first rotor blade segment along the common longitudinal axis,
- removing the alignment pin from the first rotor blade segment,
- moving the second rotor blade segment towards the first rotor blade segment along the common longitudinal axis, and
- tightly screwing a connecting bolt in the first bushing and second bushing to mechanically connect the two rotor blade segments to one another at the connection ends for the wind turbine rotor blade.

The described method enables a reliable assembly process for fixedly connecting two rotor blade segments. The described method relies on the bushings which provide a usable orientation point in contrary to the outer rotor blade surface, which has a threedimensional contour. The bushings are typically made from metal (very small tolerances) and are located in the blade segments as precisely as is needed for successful assembly. Since the bushings, however, are hidden deep inside the laminate of the respective blade segments, the alignment pin is provided, which is inserted into both bushings to allow for alignment. By using the alignment pin, both rotor blade segments can be very well aligned relative to one another. This means that an alignment can be achieved that allows bolting the segments together with very little or even no loads on the bolts, in particular no bending-forces or tensions acting on the bolts. Thus, an ideal position of the two segments with respect to each other can be achieved by the method, meaning that a) all central longitudinal axes of the bushings are exactly opposite to each other and b) all bushings are parallel to each other.

The alignment pin is designed such that it fits (e.g. locks or passes) into the pair of the corresponding first and second bushing of the first and second rotor blade segments. Firstly, the alignment pin is inserted with the first longitudinal section into the first bushing of the first rotor blade segment, wherein at least the second longitudinal section of the alignment pin protrudes out of the first bushing. Thus, the alignment pin shifts or extends the alignment engagement from within the first bushing to the outside of the first bushing. Now, the protruding portion of the alignment pin provides a very good visual and mechanical orientation for the second rotor blade segment, as the second rotor blade segment can be aligned with respect to the alignment pin and thus the first bushing by means of the second longitudinal section in order that the first and second bushing of the two segments can match each other. All remaining bushings are simultaneously aligned or can be analogously aligned.

The alignment pin overcomes the problems that a) there are typically no orientation points on the rotor blade segments that allow for an alignment in small millimeter steps/range and b) there are high tolerances in the fiber blade construction of the rotor blade (segments) which need to be compensated for.

Further, by the above method the two rotor blade segments can also be aligned aerodynamically at the same time.

Although only the use of one alignment pin is described, several alignment pins can be used at the same time, which improves the alignment process. As a general advantage, only one or few alignment pins are needed for the described alignment.

Further, as the alignment pin (or the several pins) is removed again, the space can be reused for a connecting bolt to transfer the loads.

It is noted at this point, that the step of aligning can be repeated in a further step by using a further, second alignment pin, which is different from the initially used alignment pin. For example, a first alignment pin is used for a rough alignment and the second alignment pin is used for fine tuning the alignment. The features being described with respect to the (first) alignment pin analogously apply to such further alignment pin. For further details it is referred to the respective passages below.

The alignment pin extends along a central longitudinal axis, i.e. rotational axis or middle longitudinal axis. When inserting the alignment pin into the first bushing, optionally an abutment within the first bushing can be provided to limit the insertion of the alignment pin. Similarly, an abutment can be provided at the second rotor blade segment. The alignment pin can also be defined as a rod. The alignment pin preferably is a very rigid component, in order to compensate for bending forces during the alignment process. For example, the alignment pin is a rotationally symmetrical component. For example, the alignment pin is made from metal, e.g. steel.

The first and second central longitudinal axes of the bushings are bore axes of the respective bushings or rotational axes or middle longitudinal axes.

In the step of aligning the second rotor blade segment, the second rotor blade segment can be moved and/or turned several times to find the ideal orientation to fit on the alignment pin(s). After the alignment of the rotor blade segments the first and the second central longitudinal axis of the bushings form a common longitudinal axis.

In the step moving the second rotor blade segment away, only a movement along the common longitudinal axis is allowed. For example, moving in other directions and turning the second rotor blade segment is blocked. Further, the second rotor blade segment may only be moved away from the first rotor blade segment sufficiently to remove, i.e. pull, the alignment pin out of first bushing.

According to an embodiment, the first longitudinal section is received in the first bushing in a form-fit manner and the second longitudinal section is received in the second bushing in a form-fit manner. Preferably, only a form-fit engagement of the alignment pin with the first bushing and the second bushing is provided. Thus, a very fast alignment and connection of the rotor blade segments can be achieved.

According to an embodiment, the first longitudinal section of the alignment pin comprises a thread with which the alignment pin is screwed into the first bushing in the step of inserting. This provides a force- and form-fit engagement that allows the alignment pin to be positioned securely with respect to the first rotor blade segment and thus ensures a particularly reliable alignment process.

According to an embodiment, in the received state, a clearance fit is formed between the first bushing and the first longitudinal section and between the second bushing and the second longitudinal section, respectively. A transition fit is preferred, which allows easy insertion and removal of the pin while providing secure positioning.

According to an embodiment, the first longitudinal section of the alignment pin comprises a plastic sheathing for a tight form fit of the alignment pin in the first bushing. This ensures a particularly secure and tight but detachable interaction between the pin and the first bushing.

According to an embodiment, the first longitudinal section is longer than the second longitudinal section, in particular at least three, four or five times longer. This allows the second longitudinal section to be stiffer compared to the longer first longitudinal section. Thus, certain forces acting on the alignment pin, e.g. bending forces, can be compensated for.

According to an embodiment, in the respective received state, a central longitudinal axis of the alignment pin is coaxial with the first central longitudinal axis of the first bushing and the second longitudinal axis of the second bushing. This contributes to the above-mentioned functions and advantages.

According to an embodiment, after the step of aligning the second rotor blade segment with respect to the first rotor blade segment by means of the alignment pin, an orientation of the second rotor blade segment with respect to the first rotor blade segment is frozen such that only a movement of the second rotor blade segment is allowed along the common longitudinal axis. For example, the second rotor blade segment is fixedly supported on a moveable support structure, e.g. a moveable skid. During aligning, the second rotor blade segment can be orientated with respect to the alignment pin by means of the moveable support structure. As soon as the intended orientation of the second rotor blade segment is found, this orientation is "mechanically saved". In other words, the orientation is frozen meaning that the second rotor blade segment is supported and held stationary such that only the axial movement along the common longitudinal axis is possible.

According to an embodiment, the orientation of the second rotor blade segment is frozen until the two rotor blade segments are tightly connected. This ensures a reliable connection. If using a further alignment pin after alignment with the first alignment pin, the second rotor blade segment can be moved in all directions for alignment with the further alignment pin. If the second alignment process is finished, the orientation is frozen until the final connection of the blade segments has been established.

According to an embodiment, in the step of aligning, the second rotor blade segment is translationally and rotationally movable so that the second central longitudinal axis of the second bushing can be coaxially matched with the first central longitudinal axis of the first bushing to form the common longitudinal axis. This contributes to the above-mentioned functions and advantages.

According to an embodiment, for aligning and moving the second rotor blade, the second rotor blade is fixedly supported on a movable table, in particular on a moveable skid as mentioned above. This contributes to the above-mentioned functions and advantages.

According to an embodiment, the alignment pin comprises a third longitudinal section, the third longitudinal section being arranged between the first longitudinal section and the second longitudinal section, wherein the third longitudinal section has a first abutment surface, which limits an insertion of the alignment pin into the first bushing, and an opposite second abutment surface, which limits an insertion of the alignment pin into the second bushing. By providing abutment surfaces, a fast and reliable insertion of the pin into the respective bushings is enabled.

According to an embodiment, the third longitudinal section comprises a cylindrical body, which comprises at least one of the first and second abutment surfaces. Preferably, the third longitudinal section fully is the cylindrical body, which comprises both abutment surfaces at both axial ends of the cylindrical body. Alternatively, the third longitudinal section comprises the cylindrical body and a further portion, e.g. a disc portion, wherein the cylindrical body comprises one abutment surface and the disc-portion has the other abutment surface. A cylindrical body is easy to manufacture and withstands the high forces which may occur during alignment of the rotor blade segments.

According to an embodiment, the third longitudinal section comprises a first disc-shaped section, which comprises the first abutment surface, and a second disc-shaped section, which comprises the second abutment surface, wherein the first and second disc-shaped sections are spaced apart. This is an alternative solution, which contributes to the above-mentioned functions and advantages. By providing disc-shaped sections, only little material is needed for the third longitudinal section, in particular compared to a third longitudinal section being fully formed as a cylindrical body, i.e. a body extending from the first to the second rotor blade segment in a state in which the alignment pin is inserted into both the first and the second bushing.

According to an embodiment, the third longitudinal section is formed as a disc, the disc comprising the first and second abutment surface. Thus, material can be saved, since the third longitudinal section is very thin due to the disc shape. For example, the disc has an outer diameter which essentially corresponds to an outer diameter of the first or second bushing at the respective connection end of the first or second rotor blade segment.

According to an embodiment, the third longitudinal section comprises a tool engagement element. Thus, a tool can be used to handle the alignment pin, e.g. for screwing the pin into the first bushing. The tool engagement element can be an opening, recess or a specially shaped surface, e.g. a hexagonal shaped surface.

According to an embodiment, in the step of aligning the second rotor blade segment by means of the inserted alignment pin a predetermined distance between the first and second rotor blade segments is set. For example, the design of the third longitudinal section by means of the abutment surfaces specifies the predetermined distance. This allows the second rotor blade segment to be moved back to the exact position with respect to the first rotor blade segment at the correct distance after the alignment pin has been removed. The predetermined distance, for example, corresponds to a dimension of a pressure piece being clamped between the first and second rotor blade segments in the final interconnected state.

As already mentioned above, according to an embodiment, a two-step aligning process is provided with the help of a further, second alignment pin. For example, firstly a rough alignment of both rotor blade segments is done according to the above description. However, prior to finally connecting the blade segments, a second fine alignment takes place, which analogously comprises the above steps as follows:
After the step of removing the alignment pin, i.e. the first alignment pin, the fine alignment is performed comprising the following sub-steps:
- inserting a fine alignment pin, i.e. a second alignment pin, into the first bushing such that a first longitudinal section of the fine alignment pin is received in the first bushing and a second longitudinal section of the fine alignment pin protrudes out of the first bushing,
- aligning the second rotor blade segment by means of the inserted fine alignment pin, wherein the second rotor blade segment is moved onto the fine alignment pin, such that
   -- the second longitudinal section of the fine alignment pin is received in the second bushing, and
   -- the first central longitudinal axis of the first bushing is coaxial with the second central longitudinal axis of the second bushing to form the common longitudinal axis,
- moving the second rotor blade segment and the first rotor blade segment apart from each other along the common longitudinal axis, and
- removing the fine alignment pin from the first rotor blade segment.
After these sub-steps the rotor blade segments are tightly screwed together as described above.

For the described two-step alignment process, the first and second alignment pins are different, e.g. regarding their constructional design. For example, during the first alignment process the alignment pin must compensate for high bending forces in order to achieve a first rough alignment. Thus, the second longitudinal section of this alignment pin may be shorter than the first longitudinal section. In other words, this alignment pin is designed as an asymmetric pin. The fine alignment pin can have a longer second longitudinal section, which allows for the fine adjustment to be done, wherein no or only minor forces act on the fine alignment pin. The fine alignment pin may be of symmetric design.

For the second, fine alignment, if applicable, the frozen state of the second rotor blade segment is released, in order that the second rotor blade can be moved in any direction.

The above-described embodiments for the (first) alignment pin similarly apply to the fine alignment pin.

According to an embodiment, in the step of aligning the second rotor blade segment by means of the inserted fine alignment pin a predetermined distance between the first and second rotor blade segments is set. We refer to the above description regarding the (first) alignment pin.

According to an embodiment, both the alignment pin and the fine alignment pin comprise a third longitudinal section, the third longitudinal section being arranged between the first longitudinal section and the second longitudinal section. Each third longitudinal section comprises a first and a second abutment surface, which limit an insertion of the alignment pin into the first bushing or second bushing, respectively. The third longitudinal section of the alignment pin is formed as a disc. The third longitudinal section of the alignment pin is formed as a cylindrical body. The second longitudinal section of the alignment pin is shorter than the second longitudinal section of the fine alignment pin. This contributes to the above-mentioned functions and advantages, wherein in particular the cylindrical body of the fine alignment pin defines the predetermined distance.

According to a second aspect, the use of an alignment pin for connecting two rotor blade segments of a wind turbine rotor blade is disclosed. The alignment pin extends along a central longitudinal axis and comprises at least a first longitudinal section and a second longitudinal section. The alignment pin is configured to be inserted with the first longitudinal section into a first bushing of the first rotor blade segment. The alignment pin is configured to be inserted with the second longitudinal section into a second bushing of the second rotor blade segment, such that the first bushing and the second bushing can be aligned to each other for connecting the two rotor blade segments.

The use of such an alignment pin enables the above-mentioned functions and advantages. In particular, the alignment pin is formed according to any of the above-described embodiments. Thus, the above-mentioned features similarly apply.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a segmented rotor blade with two rotor blade segments,
Figure 3 shows a schematic sectional view of an exemplary bolt connection of two rotor blade segments,
Figure 4 exemplarily shows a first rotor blade segment,
Figure 5 shows a first bushing,
Figure 6 shows a second rotor blade segment,
Figure 7 shows a second bushing,
Figure 8 shows an alignment pin according to an embodiment of the invention,
Figures 9 to 12 show different steps of the method according to an embodiment of the invention,
Figure 13 shows a schematic flow diagram of a method of connecting two rotor blade segments according to the embodiment of the invention,
Figures 14 to 16 show alignment pins according to further embodiments of the invention.

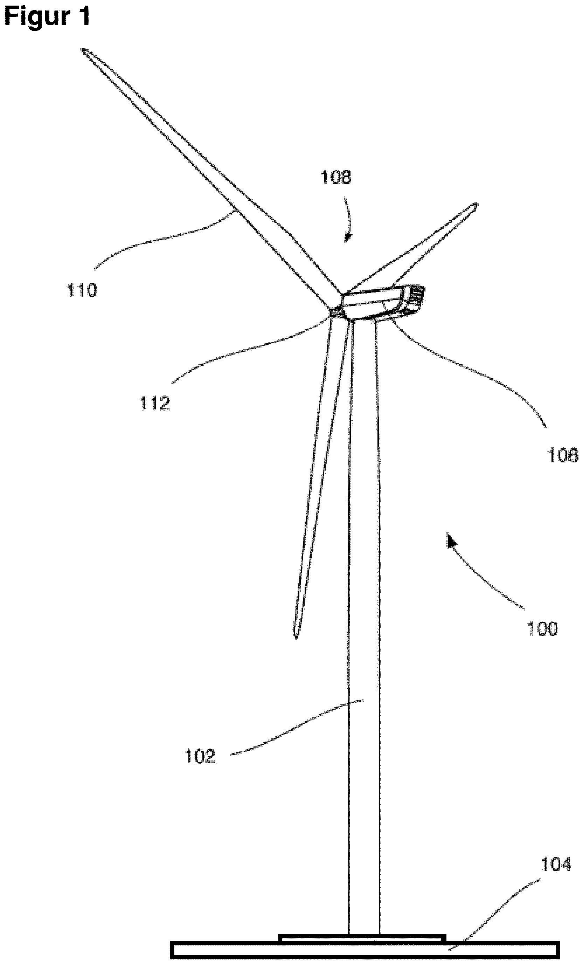

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

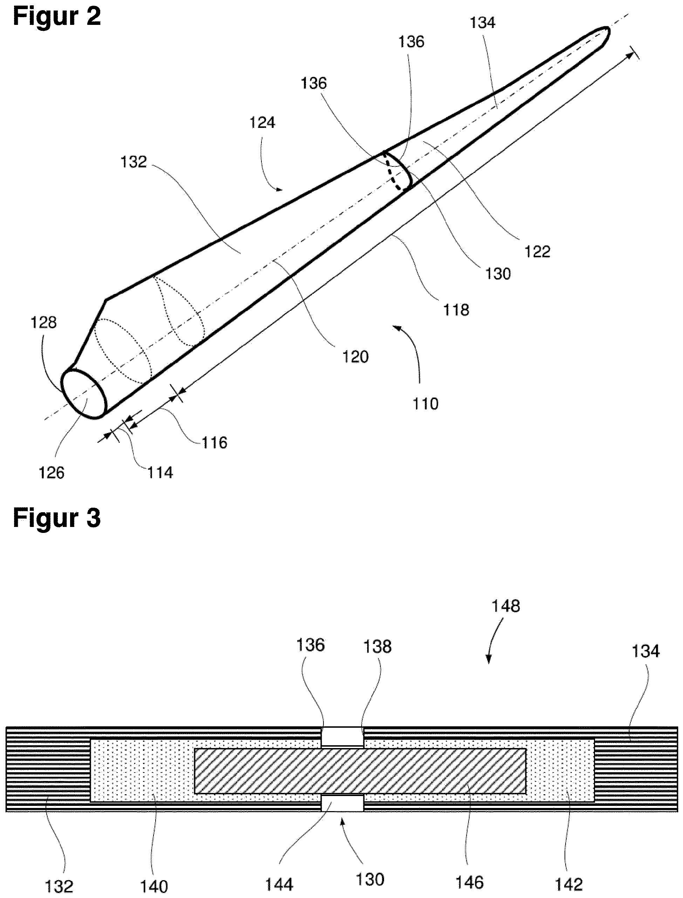

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 comprises a division area 130 where a blade-root-side rotor blade segment 132 (first rotor blade segment) and a blade-tip-side rotor blade segment 134 (rotor blade segment) are connected to each other. For this purpose, both segments 132, 134 each comprise a respective connection region 136, 138 (also connection ends). The rotor blade 110 is thus a split rotor blade as described above. Embedded into each connection end 136, 138 is a multitude of bushings 140 and 142, which are arranged according to the profile of the rotor blade 110 (in circumferential direction) and comprise internal threads for the reception of connecting bolts 146 to fixedly connect the segments 132, 134 (see Figure 3). One or both connection ends 136, 138 is/are realized for example as a flange insert, which is inserted as a prefabricated insert (with the bushings embedded therein) into a production mould for the manufacture of the rotor blade 110. However, it is also conceivable that no flange insert is provided and the bushings are embedded and laminated directly into the rotor blade half shells. The bushings are metal bushings, e.g. steel bushings, for example.

Figure 3 shows a schematic sectional view in a partial area of two connected rotor blade segments 132, 134 at the division area 130, where a single bolt connection 148 is exemplarily shown. The connecting bolt 146 is screwed into a pair of aligned first and second bushings 140, 142 to mechanically connect the two connection ends 136, 138 and thus the two rotor blade segments 132, 134. Likewise, the further pairs of first and second bushings 140, 142 are connected by respective connecting bolts 146.

Optionally as shown in Figure 3, a pretensioning unit 144 is clamped between the two connection ends 136, 138 per bolt connection 148. By the help of the pretensioning units 144, the bolts 146 can be preloaded. For example, a pretensioning unit 144 is a hydraulic nut.

Typically, the two rotor blade segments 132, 134 are mounted together at the installation site of the wind turbine 100. For this purpose, the two segments 132, 134 need to be optimally aligned with respect to each other, so that the large number of connecting bolts 146 can be screwed-in as easily as possible.

In the following, an improved method for connection of the two rotor blade segments 132, 134 is described. Please note that in the following reference is made to a single bolt connection 148. Likewise, the described method is applicable to several bolt connections 148.

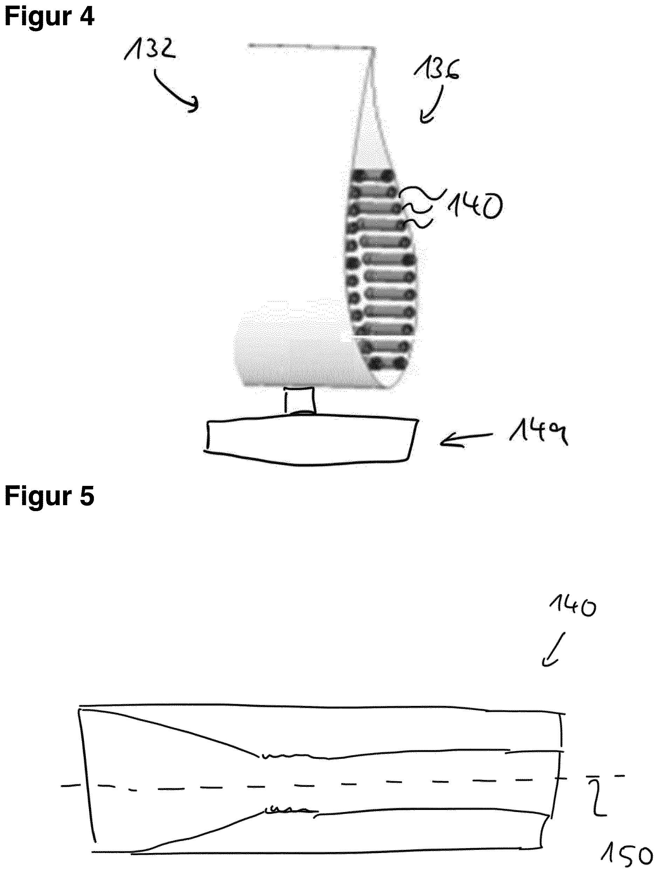

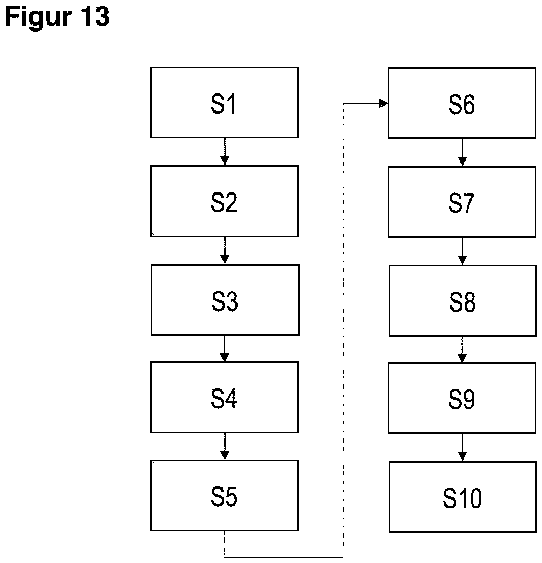

An embodiment of the invention is described with respect to Figures 4 to 13, wherein Figure 13 shows a schematic flow diagram of the method.

In a first step S1, the first rotor blade segment 132 is provided, which has at least a first metal bushing 140 at the first connection end 136. Figure 4 schematically shows the first rotor blade segment 132 with a plurality of first bushings 140. The first rotor blade segment 132 is stationary and fixedly supported on a support structure 149 (only schematically indicated in Figure 4).

Figure 5 schematically shows a respective first bushing 140 at the first connection end 136. The first bushing 140 has a first central longitudinal axis 150, which is the rotational middle axis in the present example.

It is noted at this point that here and in the following details of the rotor blade segments apart from the bushings are omitted for the sake of clarity.

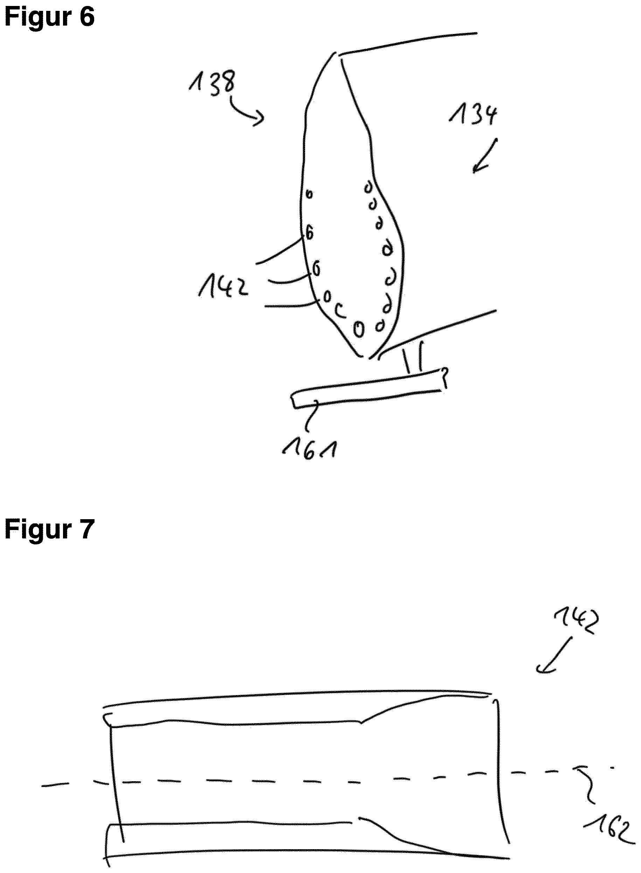

In a next step S2, the second rotor blade segment 134 is provided, which has at least a second bushing 142 at the second connection end 138, the second connection end 138 being assigned to the first connection end 136. Figure 6 schematically shows the second rotor blade segment 134 with a plurality of second bushings 142. The second rotor blade segment 134 is fixedly supported on a movable skid 161 (only schematically indicated in Figure 6). The moveable skid 161 is configured to move the second rotor blade segment 134 translationally and rotationally with respect to the stationary fixed first rotor blade segment 132.

Figure 7 schematically shows the second bushing 142. The second bushing 142 has a second central longitudinal axis 162, which is the rotational middle axis in the present example.

Note that further details regarding the bushings 140, 142, the support structure 149, and the moveable skid 161 are omitted for better readability.

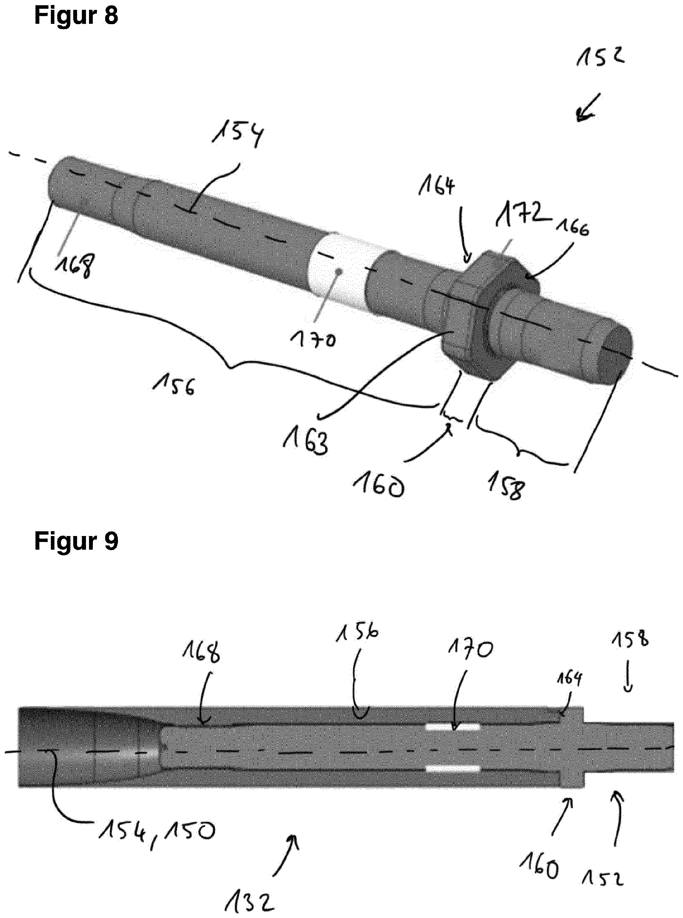

In a next step S3, a longitudinally extending alignment pin 152 is provided, which is schematically shown in Figure 8.

The alignment pin 152 has a central longitudinal pin axis 154. The alignment pin 152 has, with respect to the central longitudinal pin axis 154, a first longitudinal section 156, a second longitudinal section 158 and a third longitudinal section 160, the latter one being between the first and second longitudinal sections 156 and 158. As can be seen, the first longitudinal section 156 is longer than the second longitudinal section 158. The second longitudinal section 158 is, for example, a short rod or pin-like section. Thus, the alignment pin 152 can be seen as an asymmetric pin.

The third longitudinal section 160 is formed as a disc 163. The disc 163, has a first abutment surface 164 and an opposite second abutment surface 166. The disc 163, in the present example, has an outer diameter of 60 mm, but of course other dimensions could be possible depending on the bushings etc. Directly adjacent to the disc 163, for example, the outer diameter of the first and second longitudinal sections 156, 158 is about 40 mm. Further, the first longitudinal section 156 of the alignment pin 152 optionally has an outer thread 168 and a plastic sheathing 170 at different, spaced apart portions of the first longitudinal section 156.

In a next step S4 and with respect to Figure 9, the alignment pin 152 is inserted and screwed into the first bushing 140 via the outer thread 168 such that the first longitudinal section 156 is received in the first bushing 140. For screwing-in, the third longitudinal section 160 of the alignment pin 152 has a tool engagement element 172, which is a hexagonal shaped outer surface. Thus, a tool can engage the alignment pin 152 to turn the pin 152 to screw it into (or out of) the first bushing 140.

The insertion of the alignment pin 152 into the first bushing is limited by the first abutment surface 164, which abuts against an outer side of the first bushing 140. Thus, the second longitudinal section 158 and the third longitudinal section 160 protrude out of the first bushing 140.

Thus, the alignment pin 152 engages the first bushing 140 in a force- and form-fit manner. The plastic sheathing 170 enables a further, particularly tight form fit engagement in a respective region of the first bushing 140.

Due to the force- and form-fit engagement, the first central longitudinal axis 150 of the first bushing 140 and the central longitudinal pin axis 154 are coaxial.

We note that steps S2 to S4 can be changed selectively.

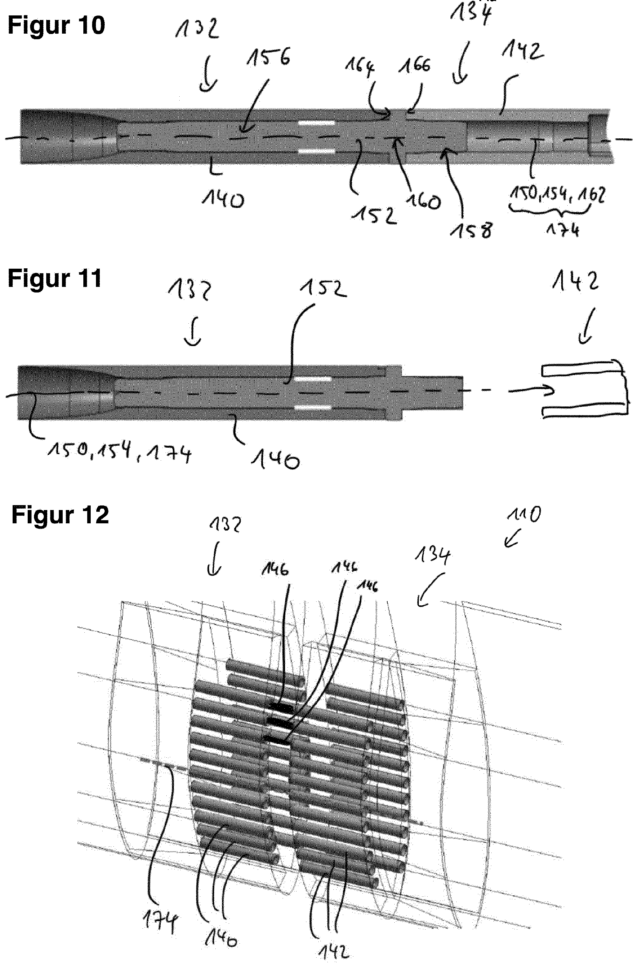

In a next step S5, with regard to Figure 10, the second rotor blade segment 134 is aligned with respect to the first rotor blade segment 132 by means of the alignment pin 152. Thereby, the second rotor blade segment 134 is moved onto the second longitudinal section 158 of the alignment pin 152. In order to fit on the alignment pin 152, the second rotor blade segment 134 can be moved and/or rotated several times in any direction with the help of the moveable skid 161. The alignment pin 152 is now received in a form-fit manner (no screwing-in) in the second bushing 142, wherein the second abutment surface 166 abuts against an outer face of the second bushing 142. In the received state, the first central longitudinal axis 150 of the first bushing 140 is coaxial with the second central longitudinal axis 162 of the second bushing 142 (and the central longitudinal pin axis 154). Both central longitudinal axes 150 and 162 form a common longitudinal axis 174.

In a next step S6, the orientation of the second rotor blade segment 134 with respect to the first rotor blade segment 132 is frozen such that only a movement of the second rotor blade segment 134 is allowed along the common longitudinal axis 174. This means that the correct orientation of the second rotor blade segment 134 is saved and does not need to be set again at a later step, e.g. when the alignment pin 152 is removed (see step S8 below).

In a next step S7, the second rotor blade segment 134 is moved away from the first rotor blade segment 132 in the frozen state along the common longitudinal axis 174 (see Figure 11 and the illustrated arrow).

In a next step S8, the alignment pin 152 is removed from the first rotor blade segment 132. For this purpose, the second rotor blade segment 134 needs to be moved away in step S7 sufficiently to screw and pull the alignment pin 152 out of the first bushing 140.

In a next step S9, the second rotor blade segment 134 is moved towards the first rotor blade segment 132 along the common longitudinal axis 174.

In a next step S10, a connecting bolt 146 (see Figure 3 exemplarily) is tightly screwed in the first bushing 140 and second bushing 142 to mechanically connect the two rotor blade segments 132, 134 to one another at the connection ends 136, 138 to form the wind turbine rotor blade 110. It is noted here that the connecting bolt 146 may also be screwed into one or both bushings 140, 142 already prior to or during step S9.

Figure 12 exemplarily shows the final state, indicating the common longitudinal axis 174 for one pair of bushings 140, 142. Further, three connecting bolts 146 are schematically indicated in figure 12.

The described method enables the above-mentioned functions and advantages.

We note that several alignment pins 152, e.g. distributed along the circumference of the blade segments 132, 134, can be used for even better alignment of both rotor blade segments 132, 134.

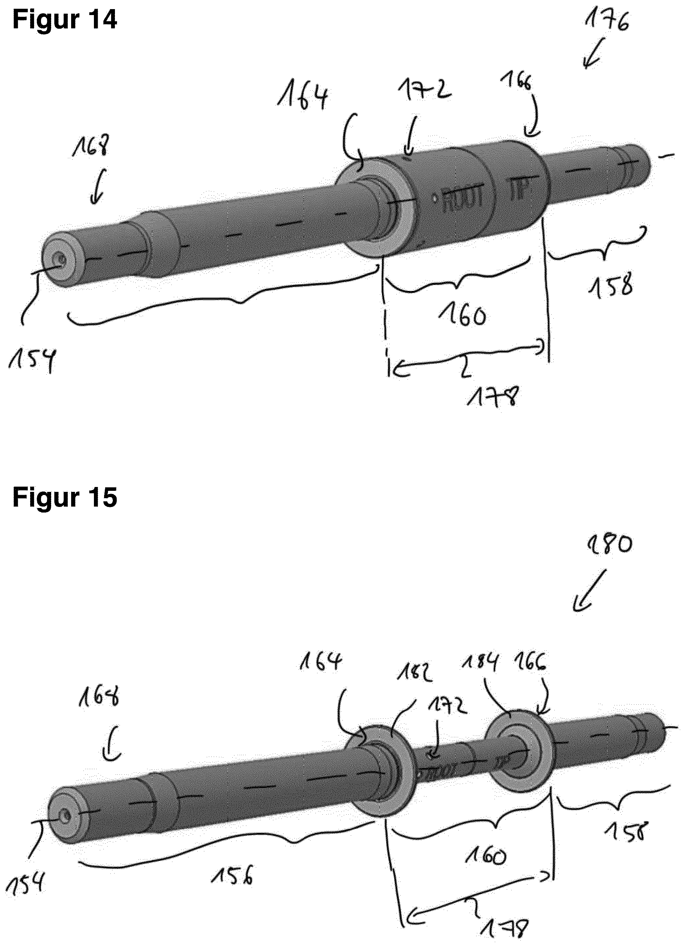

Figure 14 illustrates another embodiment of an alignment pin, a second alignment pin 176. The second alignment pin 176 is substantially the same as the alignment pin 152 described above and can be used in the described method. Unless explicitly referenced, the above description applies analogously.

The second alignment pin 176 also has a first longitudinal section 156 and a second longitudinal section 158 as above, however, the second longitudinal section 158 is not as short as above, but similar or the same length as the first longitudinal section. Thus, the second alignment pin can be seen as a symmetric pin.

In contrast to above, the third longitudinal section 160 is formed as a cylindrical body comprising the abutment surfaces 164 and 166. As a preferred option, the cylindrical body 160 has a predetermined length 178 along the central longitudinal pin axis 152, which corresponds to the dimension of a pretensioning unit 144 as shown and described with regard to Figure 3.

The second alignment pin 176 can be used instead of the first alignment pin 152. The predetermined length 178 of the third longitudinal section 160 enables that an exact distance between the two rotor blade segments 132, 134 can be achieved during the step S5, which can be memorized such that, after removal of the second alignment pin 176, the second rotor blade segment 134 can be moved back towards the first rotor blade segment 132 in the exact distance to the first blade segment 132 for tightly screwing the segments together.

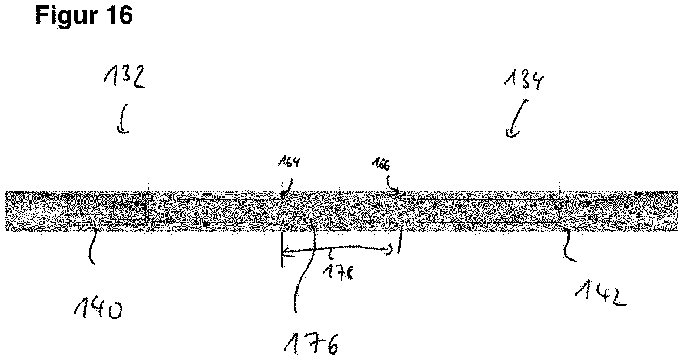

Figure 16 exemplarily shows the second alignment pin 176 being inserted into both the first and second bushing 140, 142 according to step S5 above.

Figure 15 shows another embodiment of an alignment pin, a third alignment pin 180. The third alignment pin 176 is substantially the same as the second alignment pin 152 described above and can be used in the described method. Unless explicitly referenced, the above description applies analogously.

The third alignment pin 180 differs from the second alignment pin 176 with respect to the third longitudinal section 160, which comprises two thin disc-shaped sections 182 and 184 (also named discs), wherein the one disc 182 comprises the first abutment surface 164 and the other disc 184 comprises the second abutment surface 166. The two discs 182, 184 similarly defined the predetermined length 178. Figure 15 similarly applies to the third alignment pin 180.

In a further embodiment, the second or third alignment pin 178, 180 can be used in addition to the above-described alignment pin 152, i.e. in a two-step alignment process as described in the introductory portion of this writing and will be referred to below. This means that, for example, with the first alignment pin 152 a rough alignment process is done, wherein larger tolerances are allowed, e.g. that the central longitudinal axes of the bushings are not perfectly aligned or slightly deviate from a perfect position. After completion of step S8, i.e. the removal of the first alignment pin 152, the steps S3 to S8 are repeated as sub-steps with the further alignment pin, namely the second alignment pin 176 or the third alignment pin 178. Thus, the alignment resulting from the first alignment pin 152 can be improved or fine-tuned. We note that the frozen state of the second rotor blade segment 134 needs to be released, at least a little, to allow fine adjustments of the second rotor blade segment 134 in during the repeated step S5. Such two-step alignment process enables the above-mentioned functions and advantages.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal extension direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: first bushing
- 142: second bushing
- 144: pretensioning unit
- 146: connecting bolt
- 148: bolt connection
- 149: support structure
- 150: first central longitudinal axis
- 152: (first) alignment pin
- 154: central longitudinal pin axis
- 156: first longitudinal section
- 158: second longitudinal section
- 160: third longitudinal section
- 161: moveable skid
- 162: second central longitudinal axis
- 164: first abutment surface
- 166: second abutment surface
- 168: outer thread
- 170: plastic sheathing
- 172: tool engagement element
- 174: common longitudinal axis
- 176: second alignment pin
- 178: length
- 180: third alignment pin
- 182: first disc-shaped section
- 184: second disc-shaped section

## Claims

1. Method of connecting two rotor blade segments (132, 134) of a wind turbine rotor blade (110), the method comprising the steps of:
- providing a first rotor blade segment (132) having at least a first bushing (140) at a first connection end (136),
- providing a second rotor blade segment (134) having at least a second bushing (142) at a second connection end (138), the second connection end (138) being assigned to the first connection end (136),
- providing a longitudinally extending alignment pin (152, 176, 180), which at least has a first longitudinal section (156) and a second longitudinal section (158),
- inserting the alignment pin (152, 176, 180) into the first bushing (140) such that the first longitudinal section (156) is received in the first bushing (140) and the second longitudinal section (158) protrudes out of the first bushing (140),
- aligning the second rotor blade segment (134) by means of the inserted alignment pin (152, 176, 180), wherein the second rotor blade segment (134) is moved onto the alignment pin (152, 176, 180), such that
-- the second longitudinal section (158) of the alignment pin (152, 176, 180) is received in the second bushing (142), and
-- a first central longitudinal axis (150) of the first bushing (140) is coaxial with a second central longitudinal axis (162) of the second bushing (142) and both central longitudinal axes (150, 162) form a common longitudinal axis (174),
- moving the second rotor blade segment (134) away from the first rotor blade segment (132) along the common longitudinal axis (174),
- removing the alignment pin (152, 176, 180) from the first rotor blade segment (132),
- moving the second rotor blade segment (134) towards the first rotor blade segment (132) along the common longitudinal axis (174), and
- tightly screwing a connecting bolt (146) in the first bushing (140) and second bushing (142) to mechanically connect the two rotor blade segments (132, 134) to one another at the connection ends (136, 138) to form the wind turbine rotor blade (110).

2. Method according to claim 1, wherein the first longitudinal section (156) is received in the first bushing (140) in a form-fit manner and the second longitudinal section (158) is received in the second bushing (142) in a form-fit manner.

3. Method according to claim 1 or 2, wherein the first longitudinal section (156) of the alignment pin (152, 176, 180) comprises a thread (168) with which the alignment pin (152, 176, 180) is screwed into the first bushing (140) in the step of inserting.

4. Method according to any one of the preceding claims, wherein the first longitudinal section (156) of the alignment pin comprises a plastic sheathing (170) for a tight form-fit of the alignment pin (152, 176, 180) in the first bushing (140) .

5. Method according to any one of the preceding claims, wherein the first longitudinal section (156) is longer than the second longitudinal section (158), in particular at least three or four times longer.

6. Method according to any one of the preceding claims, wherein, in the respective received state, a central longitudinal axis (154) of the alignment pin (152, 176, 180) is coaxial with the first central longitudinal axis (150) of the first bushing (140) and the second longitudinal axis (162) of the second bushing (142).

7. Method according to any one of the preceding claims, wherein, after the step of aligning the second rotor blade segment (134) with respect to the first rotor blade segment (132) by means of the alignment pin (152, 176, 180), an orientation of the second rotor blade segment (134) with respect to the first rotor blade segment (132) is frozen such that only a movement of the second rotor blade segment (134) is allowed along the common longitudinal axis (174).

8. Method according to claim 7, wherein the orientation of the second rotor blade segment (134) is frozen until the two rotor blade segments (132, 134) are tightly connected.

9. Method according to any one of the preceding claims, wherein, in the step of aligning, the second rotor blade segment (134) is translationally and rotationally movable so that the second central longitudinal axis (162) of the second bushing (142) can be coaxially matched with the first central longitudinal axis (150) of the first bushing (140) to form the common longitudinal axis (174).

10. Method according to any one of the preceding claims, wherein, for aligning and moving the second rotor blade (134), the second rotor blade (134) is fixedly supported on a movable table, in particular on a moveable skid (161).

11. Method according to any one of the preceding claims, wherein, the alignment pin (152, 176, 180) comprises a third longitudinal section (160), the third longitudinal section (160) being arranged between the first longitudinal section (156) and the second longitudinal section (158), wherein the third longitudinal section (160) has a first abutment surface (164), which limits an insertion of the alignment pin (152, 176, 180) into the first bushing (140), and an opposite second abutment surface (166), which limits an insertion of the alignment pin (152, 176, 180) into the second bushing (142) .

12. Method according to claim 11, wherein the third longitudinal section (160) comprises a cylindrical body, which comprises at least one of the first and second abutment surfaces (164, 166).

13. Method according to claim 12, wherein the third longitudinal section (160) comprises a first disc-shaped section (182), which comprises the first abutment surface (164), and a second disc-shaped section (184), which comprises the second abutment surface (166), wherein the first and second disc-shaped sections (182, 184) are spaced apart.

14. Method according to claim 12, wherein the third longitudinal section (160) is formed as a disc (163), the disc (163) comprising the first and second abutment surface (164, 166).

15. Use of an alignment pin (152, 176, 180) for connecting two rotor blade segments (132, 134) of a wind turbine rotor blade (110), the alignment pin (152, 176, 180) extending along a central longitudinal axis (154) and comprising at least a first longitudinal section (156) and a second longitudinal section (158), wherein
- the alignment pin (152, 176, 180) is configured to be inserted with the first longitudinal section (156) into a first bushing (140) of the first rotor blade segment (132),
- the alignment pin (152, 176, 180) is configured to be inserted with the second longitudinal section (158) into a second bushing (142) of the second rotor blade segment (134), such that the first bushing (140) and the second bushing (142) can be aligned to each other for connecting the two rotor blade segments (132, 134).
